# EUROPEAN PATENT APPLICATION

(11) **EP 0 932 116 A1**
(43) Date of publication of application: **28.07.1999**
(21) Application number: 98420115.2
(22) Date of filing: 06.07.1998
(51) Int. Cl.: G06K 11/08

(54) **Interactive interface**

(30) Priority: 22.01.1998 FR 9800871
(71) Applicant: EASTMAN KODAK COMPANY, Rochester, New York 14650-2201 (US)
(72) Inventor: Vachette, Thierry, Kodak Industrie, 71102 Chalon sur Saone cedex (FR); Sirand-Rey, Gérard René, Kodak Industrie, 71102 Chalon sur Saone cedex (FR); Charret, Alain André, Kodak Industrie, 71102 Chalon sur Saone cedex (FR)
(74) Representative: Buff, Michel

(57) **Abstract**

The interactive interface has no moving parts and includes a base 2, a sensor 3 sensitive to radiation, a sphere 1 which is transparent to said radiation and is located above the base and an electronic for transforming the information produced by the sensor into signals provided to an external computer. Advantageously, the interactive interface is also provided with a source 4 emitting into the sensitive region of radiation of the sensor.

## Description

The present invention relates to the domain of interfaces for computers, and especially to devices that allow a person to communicate with a computer in order to obtain a desired result from it.

Since the invention of the first tool, man has always paid particular attention to the way he can get the most from a tool. One of the aspects of this is the way that man interacts with the tool itself. This includes among other things, how it is held, its controllability, and also and most importantly, how easy it is to handle in order to obtain the desired result. In addition, it is not enough to have a tool that can be used easily to obtain an expected result, it is also necessary that anyone can easily and simply use it without the need for long and arduous learning.

In recent years this aspect of the problem has become especially sensitive with the massive development of electronic systems in general, and computers in particular. In fact there is very little to be found in common between the stream of electrons that characterizes all electronic operations, and the interactive qualities of a human being. However, many interfaces have been developed for this purpose, most of them allowing a mechanical interaction generated by the person which is transformed into an electrical signal by means of the interface. There are for example, the various push buttons that operate as current switches, and rotary and slider controls, which allow the flow rate of electrons to be varied according to their position.

Other more sophisticated systems have been developed in order to allow more simple use even at a distance. Such systems have used the principle of switching on with a noise or the detection of an object close to a detector. There is even an interface making direct use of an electric current transmitted from the user to the electronic device, commonly called a sensing switch. In this type of device, the user transmits a weak electric current to a metal surface. This current is amplified, and then used to create the wanted action. The most well know application is a dimmer switch for incandescent or halogen lamps for domestic situations.

As for computers, since their invention some fifty years ago, many interfaces have been created in order to attempt to allow people to interact in an increasingly simple way with these machines that are at the same time becoming increasingly complex. These interfaces can be put into two groups: the first group, which is now called passive interfaces, supplies data to the user, for example in visual or audible form; and the second group called interactive interfaces, allows information to be supplied to the computer so that it can act according to what the operator wants. The first interactive interface which has widespread use is the electronic keyboard. Copied directly from typing machines, the keyboard has the enormous advantage of being apt to be used easily by anyone knowing how to type, in order to transmit commands to the machine. However, a novice user will be faced with two problems when first using this type of interface. Firstly, the user will have to learn arduously how to type, that is learn where to find each of the keys on the keyboard, and how to press them effectively. Then, the user will have to learn the set of instructions that the computer is capable of recognizing and which are the parameters that can be associated with each command. After this double specialized learning, the user will then be familiar with the interface, so long as it is used regularly, and so long as the user does not forget either the manipulations or the syntax. They can then make the most of their system. The DOS and UNIX type disk operating systems are a well known example of this type of interface.

Other interfaces then appeared on the market to simplify the man/machine interaction and make people's learning easier and more intuitive. Among these interactive interfaces there are touch screens or 'mice', which allow the selection of various possible functions displayed visually by the computer on a screen, and which the operator points to with a finger or by moving a pointer in order to select the desired function. This type of interactive interface requires not only a visual presentation of the information, but also an understanding of the function that the computer will execute when the choice has been made. When many choices are possible, the function obtained by the computer must be explained either by a message or in a manual.

There are also games controllers, also called 'joysticks', whose functions are adapted to the more or less limited choices provided by the computer. This type of interactive interface usually has a movement control, which is either a moveable lever or independent buttons, and an action control, which is usually buttons. The user therefore has to learn the operation of all these buttons, which according to the game, produce different effects.

If an approach that is more intuitive than reflective is preferred, the choice of the computer's operation is difficult to display on the screen because it is the display of the result of the choice that shows the operator what type of functioning has started. For touch sensitive screens, the display of the available choices usually takes up a lot of space, which is a major disadvantage for displaying the result.

Except for the touch screen, all these interactive interfaces have moving parts whose operation ends up being defective. Even the fingers of the users of these screens leave marks on the screens which in due course can hinder their correct functioning.

An interactive interface is needed with no moving parts and which operates without contact, in order to be more reliable.

Other characteristics and advantages of the invention will appear on reading the description that follows with reference to the attached drawing in which:
Figure 1 shows one embodiment of the interactive interface according to the invention;
Figure 2 shows the embodiment of the interactive interface shown in Figure 1 in which part has been removed to show the inside of this interactive interface;
Figure 3 shows another embodiment of the interactive interface as represented in Figure 2;
Figure 4 shows yet another embodiment of an interactive interface as represented in Figure 2;
Figure 5 shows another external form for an embodiment of an interactive interface according to the invention;
Figure 6 shows in diagrammatic form a possible electronic interfacing for the embodiments of an interactive interface according to the invention.
Figure 7 shows another embodiment of an interactive interface according to the invention in which parts has been removed to show the inside of this interactive interface.

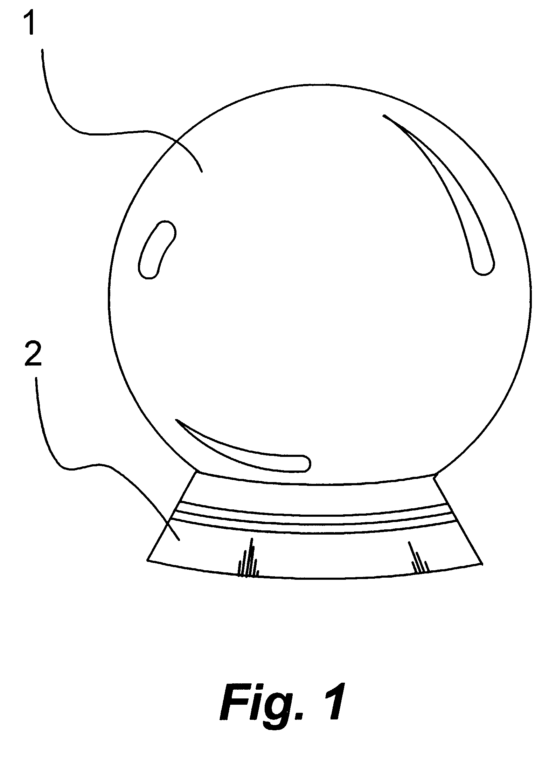

As can be seen in Figure 1, the interface according to the invention includes an almost spherical part 1 set on a base 2. This form has the advantage of making people think of a crystal ball. By the association of ideas a person coming near this interface automatically wants to move their hands around this almost spherical surface to make something magical happen.

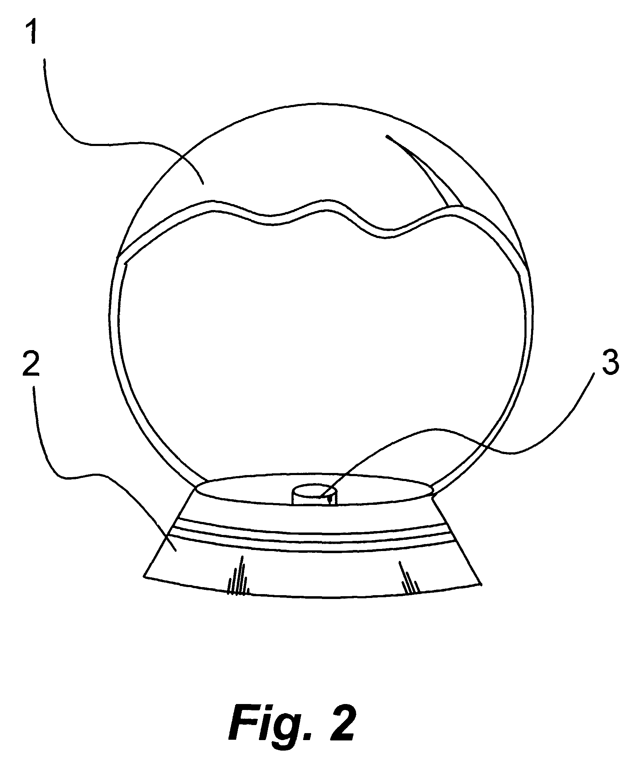

Figure 2 shows the inside of the interactive interface. The base is fitted with a sensor 3 allowing a signal to be given which is a function of the position of the user's hands in front of the spherical part. In the first embodiment the sensor is sensitive to wave lengths between 400 nm and 700 nm.

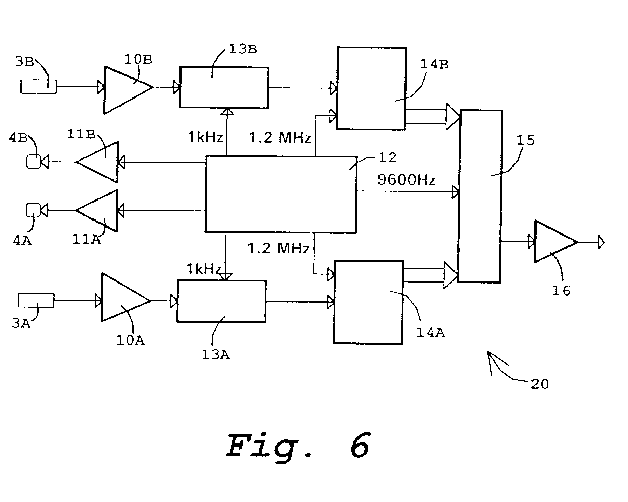

These sensors can be made up of photodiodes or phototransistors that are well known in photo-electronics. The interface is located in a lighted environment and receives radiation which is transformed into an electrical signal by the sensor. The placing of the operator's hands in front of the spherical part modifies the lighting received by the sensor which then gives a modified signal. This signal is transmitted to an electronic interfacing device 20 of the type shown in Figure 6, and which will be described in more detail below. The signal is digitized by the electronic interfacing device then transmitted to a computer in which it is used to modify the display produced on its screen.

In another embodiment, the sensor 3 is a pyroelectric detector sensitive to radiation between 1 µm and 18 µm, and more particularly between 1 µm and 10 µm, for example a detector manufactured by the Murata® company with the reference No. IRA-E700STO. In this case, the heat of the operator's hands is the source, and according to their position and distance, varies the energy given to the detector. The energy variations allow a signal to be generated which is digitized by the electronic interfacing device and then transmitted to a computer in which it is used to modify the display produced on its screen.

In another preferred embodiment, the sensor is sensitive to infrared radiation between 700 nm and 1100 nm. In this preferred embodiment the sensor is a photodiode fitted with an infrared filter, for example such as the sensor manufactured by the Siemens® company and sold under the reference No. SFH205. This sensor operates in photo-voltaic mode.

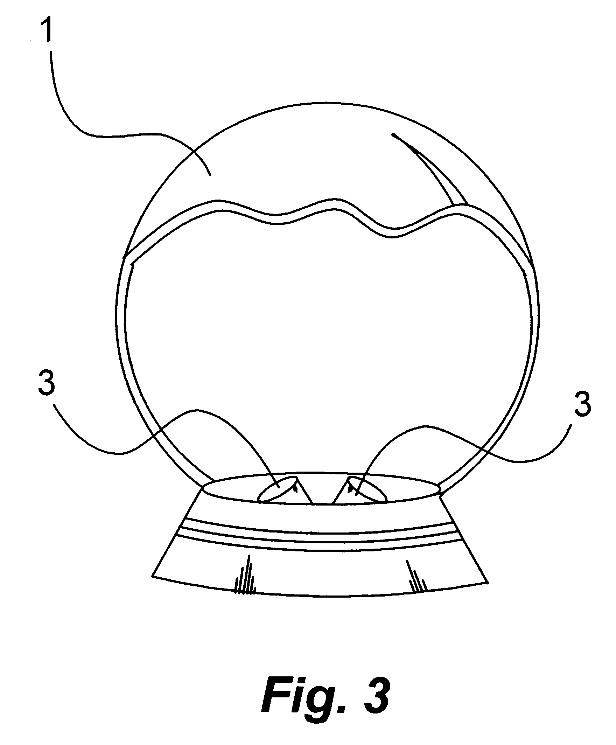

Figure 3 shows another embodiment according to the invention in which the device includes two sensors similar to those described in the previous embodiments. The orientation or the position of each of these sensors allows two quite separate channels to be defined sensitive to the variations produced in various solid angles. This may be obtained either by various orientations or by masks. In this way, one of the sensors is more sensitive to the position or movement of the right hand while the other sensor is more sensitive to the position or movement of the left hand.

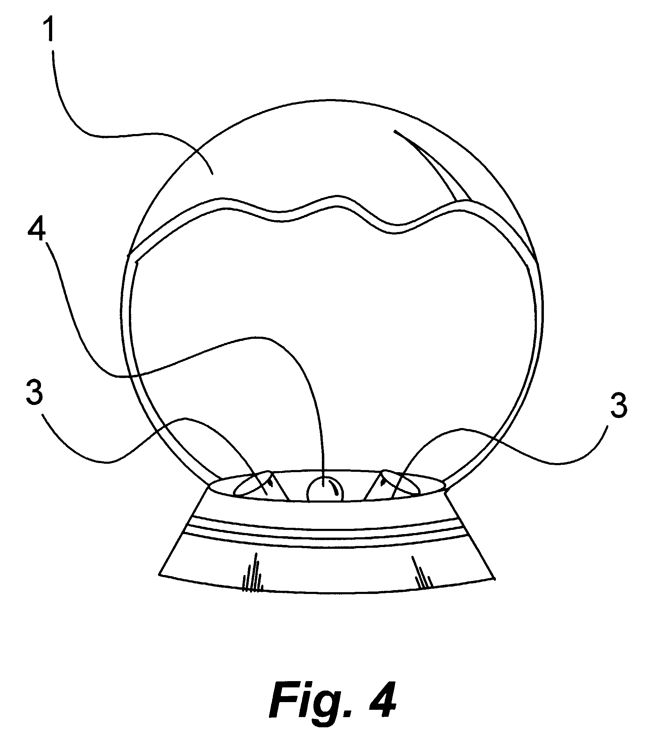

Figure 4 shows the preferred embodiment according to the invention. In addition to the two sensors 3, a source 4 is introduced inside the base 2, which produces a radiation whose wave length is matched to the sensitivity of the sensor(s) 3. It is clear that the position of the source must be such that the radiation coming from this source does not interfere too much with the flux reflected by the external environment and allows detection of the variations of the reflected flux. In this preferred embodiment the source is a light emitting diode known by the name Opto-diode OD8811 which gives a radiation with wave length 880 nm with an emission angle of 60°. It is clear the source 4 can be made up of several sources to cover a wider angle and/or to achieve a greater flux.

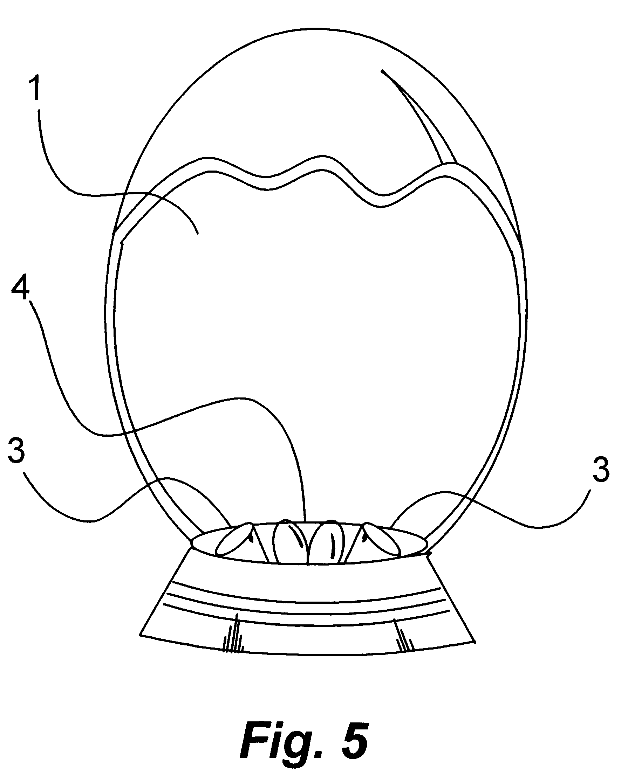

Figure 5 shows another possible embodiment of the interactive interface according to the invention, in which the source is represented by two opto-diodes 4 tilted one in relation to the other to create two separate solid angles allowing two separate channels to be developed. It is clear that the interactive interface according to the invention can take any external shape but that visually a spherical or almost spherical shape is more pleasing to most potential users. Also, the spherical shape more easily suggests to most people a crystal ball; which invites people to move their hands around the interactive surface.

Figure 6 shows another possible diagram for transforming the flux received by the sensors into digital signals transmitted to a computer. In the embodiment shown, the electronic interfacing device 20 has two separate channels marked A and B. The infrared source 4A, of type OD8811, for example is tilted to the left of Figure 5 while the source 4B, of type OD8811, is tilted to the right. In this way the source 4A lights the left hand in preference, while the source 4B lights the right hand of the person located in front of the interactive interface shown in Figure 5. Clearly this is only given as a non restrictive example.

In the preferred embodiment the circuit includes a time base 12 supplying a clock signal at a set frequency. This clock signal is sent to the power amplifiers 11A, 11B linked to the light emitting diodes 4A, 4B to switch them on at a set frequency. The flux emitted respectively by each source 4A, 4B is reflected by the operator's hands to be received by the respective sensor 3A and 3B, of type SFH205, associated to each source. A current/voltage converter 10A/10B receives the signal produced by each sensor 3A, 3B to adapt this signal to the input of an amplifier 13A, 13B of a synchronous detection type in order to be transmitted to an analog/digital converter 14A, 14B. It is clear that the clock signal transmitted to the power amplifiers 11A, 11B is also transmitted to the respective amplifier 13A, 13B so as to synchronize detection of the signal and to be able to discriminate the flux reflected by the operator's hands from the interference lighting supplied by the environment. It would be an advantage for both of these channels to have a frequency of 1 kHz.

The signal coming from each of the amplifiers 13A, 13B is sent to an analog/digital converter 14A, 14B respectively, so as to digitize the signal coming from each sensor 3A, 3B and to send it into a shift register 15. In a preferred embodiment each analog/digital converter 14A, 14B supplies a signal including 12 bits. The operation of each analog/digital converter is determined by the time base 12 by means of another clock signal whose frequency is for example 1.2 MHz. It would be an advantage for the time bases supplied to the channels A and B to be synchronized and 90° out-of-phase. It is also clear that different time bases can be used for each channel, but the electronics would be slightly more complex. Clearly different wave lengths can also be used for each channel. This type of operation allows interference between channels to be reduced or suppressed. In fact, the radiation received by one of the operator's hands is sent not only to the sensor associated to this hand, but also to the other hand which in turn reflects the flux to its corresponding sensor. The signals coming from each converter 14A, 14B are sent in parallel to a shift register 15 so that they can be transmitted by means of another clock signal to an output port either parallel or series. In one embodiment an RS232C type interface 16 was used. Clearly any other system of data transmission can be used, for example infrared transmission or RF radio frequency transmission.

It is clear that the circuit described in Figure 6 can be modified and adapted by engineers to take account of the integrated circuits used, the functions wanted or the type of sensors.

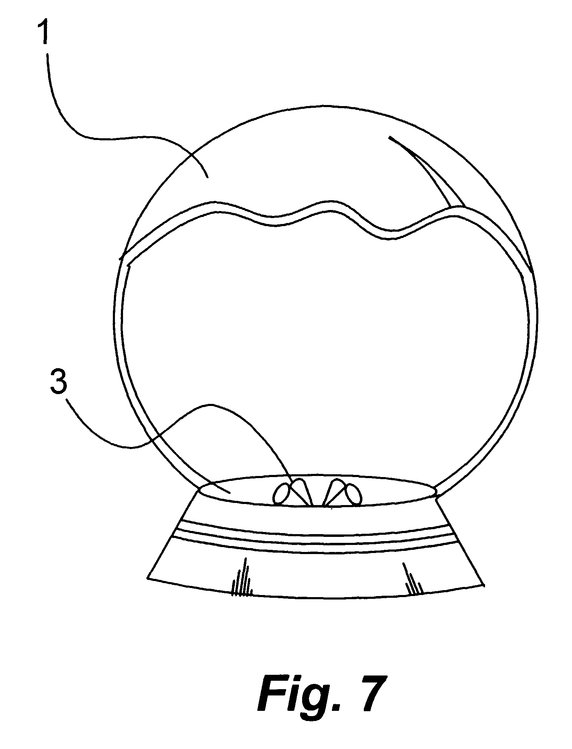

As represented on Fig.7, the interactive interface comprises more than two sensors. Each sensor is able to provide a signal which is dependent on the location of the operator's hands with respect to the interactive interface. Obviously, an interface's user has only two hands and consequently, the values of the signals provided by the sensors will be correlated to each other. However, the correlation factor is less than one. It is evident that the correlation factor is dependent on the solid angle under which said sensor detects the location of the hand of the user. The specific embodiment shown on Fig.7 comprises four sensors 3. Advantageously, these sensors are so designed in order to determine four non overlapping regions. With such an embodiment, an operator or user, by moving the hands around the interactive interface could, for example, put the palm of its left hand in register with the region detected by a first sensor of the interactive interface and the fingers of its left hand in register with the region detected by a second sensor of the interactive interface and , put the palm of its right hand in register with the region detected by a third sensor of the interactive interface and the fingers of its right hand in register with the region detected by a fourth sensor of the interactive interface. Thus, the four signals provided by the interactive interface, although correlated to each other since the fingers of one hand are attached to the palm of said hand, exhibit low correlation factors since the fingers of one hand are highly movable with respect to the palm of said hand.

Obviously, interactive interface having more than four sensors could also be provided. The various signals obtained will exhibit values more or less correlated to each other when operated with a single operator. However, the operation of such an interactive interface by a plurality of operators acting simultaneously on the interactive interface provide a better decorrelation of the values provided on each sensor.

It is clear that each sensor could be associated with a light emitting diode such as previously discussed in connection with Figs. 4 and 5. It is also clear that coupling of channels could be inproved by electronic circuitry similar to the one described in connection to Fig. 6.

## Claims

1. Interactive interface, allowing a multitude of signals to be generated that can be used by a computer, not including any moving parts and having:
a base (2);
a sensor (3) operating in a set wave length range and giving an electric signal or having a characteristic electric variation whose amplitude is a function of the intensity of radiation received by the sensor;
a device (1) defining a volume set above the base, and this device being transparent or translucent to radiation located within the set range;
an electronic interfacing device (20) producing output signals from this interface function of the information produced by the sensor.

2. Interface according to claim 1, in which the sensor is sensitive to wave lengths between 1 µm and 10 µm.

3. Interface according to claim 1, in which the sensor is sensitive to wave lengths between 650 nm and 1.1 µm.

4. Interface according to claim 1, in which the sensor is sensitive to wave lengths between 400 nm and 700 nm.

5. Interface according to any of claims 1 to 4, in which the device defines a sphere.

6. Interface according to any of claims 1 to 4, in which the device defines a surface of revolution whose generator is a concave closed curve.

7. Interface according to any of claims 1 to 6, in which the electronic interfacing device gives an analog signal.

8. Interface according to any of claims 1 to 6, in which the electronic interfacing device gives a digital signal either in parallel form or in series form.

9. Interface according to any of claims 7 or 8, in which the signal is transmitted by an infrared or RF link.

10. Interface according to any of claims 1 to 9, including at least one source of radiation (4) adapted to the sensor.

11. Interface according to claims 10, in which each source is amplitude modulated (12, 11) and associated to a synchronous detection (12, 13) of the sensor signal.

12. Interface according to any of claims 1 to 11, including several measuring channels.

13. Interface according to claim 11, including two channels, each associated to a distinct source.
